# EUROPÄISCHE PATENTANMELDUNG

(11) **EP 0 959 100 A2**
(43) Veröffentlichungstag der Anmeldung: **24.11.1999**
(21) Anmeldenummer: 99810401.2
(22) Anmeldetag: 07.05.1999
(51) Int. Cl.: C08J 9/14

(54) **Polysiloxanmasse und deren Verwendung**

(30) Priorität: 19.05.1998 DE 19822447
(71) Anmelder: HILTI Aktiengesellschaft, 9494 Schaan (LI)
(72) Erfinder: Münzenberger, Herbert, 65191 Wiesbaden (DE); Rump, Stefan, 86899 Landsberg (DE); Mika, Horst-Dieter, 86899 Landsberg (DE)
(74) Vertreter: Wildi, Roland

(57) **Zusammenfassung**

Die verschäumbare 1-Komponenten-Masse enthält Polysiloxan und Vernetzungsmittel, welche in einem bei Atmosphärendruck Treibgas bildenden Lösungsmittel enthalten sind.

## Beschreibung

Die Erfindung betrifft eine verschäumbare 1-Komponenten-Polysiloxanmasse und deren Verwendung.

Verschäumbare Polysiloxanmassen als Zweikomponentensysteme sind seit langem bekannt. Hierbei werden vom Anwender am Einsatzort die zuvor getrennten Reaktionskomponenten gemischt und unmittelbar eingesetzt. Die Handhabung ist bisweilen umständlich und zudem schon wegen möglicher Mischfehler störanfällig. Der Erfindung liegt die Aufgabe zugrunde, verschäumbare Polysiloxanmassen zur Verfügung zu stellen, die als 1-Komponentenmassen einfach und störungsfrei anwendbar sind. Dabei werden im Sinne der vorliegenden Erfindung unter 1-Komponentensystemen solche Systeme verstanden, die ohne vom Anwender oder zuvor zB getrennt zu veranlassende Mischvorgänge unmittelbar appliziert werden können unter Bildung des gewünschten dann ausreagierenden Schaumes.

Die Lösung der Aufgabe gelingt bei Polysiloxanmassen erfindungsgemäss dadurch, dass in einem Druckgefäss Polysiloxan und Vernetzungsmittel für das Polysiloxan in einem bei Raumtemperatur und bei Atmosphärendruck gasförmigen, zur Bildung von Treibgasen befähigten niedrig siedenden, unter überatmosphärischem Druck bei Raumtemperatur flüssigen Lösungsmittel oder Lösungsmittelgemisch zumindest teilweise gelöst enthalten sind. Als Polysiloxane sind Polyorganosiloxane, insbesondere lineare Polyorganosiloxane bevorzugt. Als organische Reste enthalten sie bevorzugt niedere Alkylgruppen, insbesondere Methylgruppen, wobei partiell reaktive Gruppe, wie Silanolgruppen im Molekül angeordnet sind. Die erfindungsgemässen Massen enthalten weiter die an sich bekannten alkalischen, neutralen oder sauren Vernetzer, wie Aminvernetzer, Oxim-, Benzamid-, Alkoxy- und/oder Acetatvernetzer. Gegebenenfalls können die Vernetzer in blockierter Form angelagert sein.

Als wesentlichen Bestandteil für die Verschäumung enthalten die erfindungsgemässen Massen niedrig siedende Lösungsmittel, oder niedrig siedende Gemische von Lösungsmitteln, welche die Polysiloxane zumindest weitgehend gelöst enthalten. Die erfindungsgemässen Massen stehen unter Druck gegenüber der Atmosphäre, so dass die niedrig siedenden Lösungsmittel in verflüssigter Form vorliegen und erst beim Entspannen auf Atmospärendruck mit ihren unterhalb Raumtemperatur liegenden Siedepunkten sofort verdampfen und damit unter Verschäumung der Polysiloxanmasse ihre Funktion als Treibgase in zudem spontaner Weise ausüben können. Unter Atmospärendruck werden im Sinne der Erfindung Drücke einer Grössenordnung von 100 KPa verstanden. Bei den zunächst als Lösungsmitteln, unter Entspannen als Treibgase für die Verschäumung wirkenden Verbindungen handelt es sich regelmässig und bevorzugt um Lösungsmittel oder -Gemische mit einem Siedepunkt von < 10° C, insbesondere < 5° C. Beipiele hierfür sind niedere Kohlenwasserstoffe, niedere Halogenkohlenwasserstoffe und/oder Dimethyläther z.B. Propan, Butan, C₂-C₃-Chlorkohlenwasserstoffe und/oder -Fluorkohlenwasserstoffe und deren Gemische.

Die erfindungsgemässen 1-Komponenten-Polysiloxanmassen weisen dank der Lösungsmittel niedrige Viskosität auf. Sie sind in aller Regel in Druckbehältnissen enthalten, aus denen sie z.B. über die üblichen Ventile in Freiheit gesetzt werden können. Aufgrund der spontan verdampfenden, dann als Treibgase wirkenden Lösungsmitteln tritt eine unverzügliche Verschäumung ein, unter gleichzeitiger Aushärtung des Schaumes infolge der nun Zutritt erhaltenden Luftfeuchtigkeit. In Druckgefässen unter Ausschluss von Wasser (Luftfeuchtigkeit) besitzen die erfindungsgemässen Massen hohe Lagerfähigkeit .

Die erfindungsgemässen verschäumbaren 1-Komponenten-Polysiloxanmassen können Füllstoffe wie amorphes SiO₂, Carbonate, wie Kreide, Dolomit, Kaoline, amorphe und kristalline, feinteilige Silikate, Alumosilikate, Magnesia-silikate und -alumosilikate, anorganische und/oder organische Fasern, Glashohlkugeln, Farbstoffe, Pigmente, Thixotropiermittel, Viskositätsimprover, Haftvermittler, Dispergiermittel, Stabilisatoren, Härtungskatalysatoren und dgl. enthalten.

Vorzugsweise werden die erfindungsgemässen Massen zum Ausschäumen auf dem Bausektor von Hohlräumen oder Durchbrüchen verwendet, zumal sie an Mauerwerk, Beton und Naturstein gut haften.

### Beispiel:

| | |
|---|---|
| 62,2 g | Siliconpolymer Polydimethylsiloxan mit entständigen Silanolgruppen (Silopren E50 Bayer AG) |
| 23,8 g | Siliconöl Polydimethylsiloxan (nur CH₃ - funktionelle Gruppen) (M 1000 (Bayer AG) |
| 9,0 g | hydrophobes Siliziumdioxid (Aerosil R 202 Degussa AG) |
| 4.0 g | Acetatvernetzer -O-CO-CH₃ |
| 1,0 g | Haftvermittler (difunktionelle Silane) |
| 25,0 g | R134 (Tetra-1,1,1,2-fluoräthan) |
| 14,0 g | Propan/Butan |

Die aufgeschäumte Siliconmasse ist nach 12 min (23°C/50 % rel. Feuchte) klebfrei.

## Patentansprüche

1. Verschäumbare 1-Komponenten-Polysiloxanmasse, dadurch gekennzeichnet, dass Polysiloxan und Vernetzungsmittel für das Polysiloxan in einem bei Atmosphärendruck zur Bildung von Treibgas befähigten, niedrig siedendem, unter Druck verflüssigtem Lösungsmittel oder Lösungsmittelgemisch zumindest teilweise gelöst enthalten sind.

2. Polysiloxanmasse gemäss Patentanspruch 1, dadurch gekennzeichnet, dass als Polysiloxan Polyorganosiloxane, vorzugsweise lineare Polyorganosiloxane enthalten sind.

3. Polysiloxanmasse gemäss Patentanspruch 1 oder 2, dadurch gekennzeichnet, dass als bei Atmosphärendruck Treibgas bildende Lösungsmittel niedere Kohlenwasserstoffe, niedere Halogenkohlenwasserstoffe und/oder Dimethylether enthalten sind.

4. Verwendung der Polysiloxanmassen gemäss einem der vorhergehenden Patentansprüche zur Ausschäumung von Hohlräumen und/oder Durchbrüchen im Bauwesen.
